(19) Europäisches Patentamt / European Patent Office / Office européen des brevets

(11) **EP 3 456 596 A1**

(12) **EUROPEAN PATENT APPLICATION**

(43) Date of publication:
**20.03.2019 Bulletin 2019/12**

(51) Int Cl.:
**B60W 30/095** (2012.01)

(21) Application number: **17465548.0**

(22) Date of filing: **14.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Continental Automotive GmbH**
**30165 Hannover (DE)**

(72) Inventor: **Benea, Marius-Tudor**
**550190 Sibiu (RO)**

(74) Representative: **Büchner, Jörg**
**Conti Temic microelectronic GmbH**
**Intellectual Property**
**Sieboldstrasse 19**
**90411 Nürnberg (DE)**

(54) **METHOD AND DEVICE OF PREDICTING A POSSIBLE COLLISION**

(57) The invention relates to a method and a device of predicting a possible collision between an ego vehicle and an oncoming traffic participant, at least one of them following a curved path. The method comprises the following steps: after an oncoming traffic participant is detected in a predetermined scanning zone of the ego vehicle (E) and is selected as a target (T), a measured trace of the target position, speed and angle relative to the ego vehicle is generated. Then, an approximated current core path of the target is constructed, and a current core path for the ego vehicle is computed and predicted for a maximum admissible length. The intersecting points of the predicted core path of the ego vehicle and the approximated core path of the target are computed and the most critical intersection points are taken into consideration, in order to predict a possible collision of the ego vehicle with the target based on the probability for the ego vehicle to reach the most critical intersection points within a predefined time interval.

Fig. 10

**Description**

The invention refers to a method and device of predicting a possible collision of a vehicle with an oncoming moving object, intended mainly for mitigate lateral collision.

For autonomous or semi-autonomous driving systems, radar sensors are used in order to increase the safety of the cars, either by alerting the driver of an important danger or by triggering autonomous reactions, which can involve braking or steering the car, in case of imminent collisions.

Short-range radars, endowed with large field of views, are mounted on a car's corners monitor large areas around the car and can be used in order to predict probable lateral collisions with other cars. Functions that alert the user about such probable collisions are already in use in passenger cars, but often they consider straight, linear trajectories to predict an intersection point, which may be sufficient for driver alert functions, for low driving speeds, or when the host vehicle is standing, but which can cause issues for more important decisions, like having to automatically brake or to steer the car in order to increase the safety of passengers.

Patent US8060306B2 discloses a method and system for avoiding an obstacle. The system comprises a mapping module or path filtering module which is arranged to identify admissible curved paths for which the vehicle is able to stop prior to reaching a detected obstacle in accordance with an observed translational velocity and an observed rotational velocity. A data processor determines a respective objective function for the candidate translational velocities and candidate rotational velocities associated with the admissible curved paths, where the objective function includes a curvature comparison term associated with the last curved path of the vehicle. A search engine or data processor selects preferential velocities, among the candidate translational velocities and candidate rotational velocities, with a superior value for its corresponding objective function, and the path planning module or data processor determines the vehicular speed and trajectory for a path plan that avoids the obstacle consistent with the selected preferential velocities. In this case, the invention takes into consideration the subject vehicle's path as a series of admissible curved paths, but it concerns only the case of a possible collision with a static obstacle, not a moving one.

Another patent document, US 5841366, discloses a traveling-path deduction apparatus and method. The said method is able to detect objects existing ahead of the vehicle and to deduce a temporary traveling path of the vehicle and to set the traveling path having the minimum time change amount in the distances. It is said that in case of a properly-set temporary traveling path, the path and running loci of the preceding vehicles are on a concentric circle. However, having to compute a plurality of temporary traveling paths with different curvatures requires a lot of computing resources, when the preceding vehicle (or the vehicle ahead) does not follow a straight trajectory.

None of the afore-mentioned inventions has addressed the lateral collision function, where having to brake the car automatically or even to steer in order to avoid a collision requires a better understanding of the movement of both the ego vehicle and an oncoming vehicle, referred as target. Models for predicting both ego and target vehicles' paths when they don't follow straight trajectories should be defined and a method of avoiding collision based on computing the distance left to the intersection point, in these cases, should be proposed.

Therefore, there is a need for increased accuracy on predicting a possible collision of vehicles when at least one traffic participant is following a curvilinear path.

The object of the invention is to indicate means for accurately avoiding collision between an ego vehicle and a target vehicle, when at least one of them follows a curved path.

According to the invention, this object is achieved by the subject matters of the independent claims, namely a method and a device of predicting a possible collision, as well as a vehicle equipped with such means. Further advantageous developments are the subject matter of the dependent claims.

According to a first aspect, the invention provides a method of predicting a possible collision of an ego vehicle with a target vehicle, at least one of them following a curve path. A traffic participant entering in a predetermined scanning area is selected and traced as a target. Its approximated current core path is constructed, and a core path of the ego vehicle is computed as well. The ego vehicle core path is predicted by extrapolation up to a maximum admissible value, and the intersecting points of the respective core paths are computed. By taking into consideration the most critical intersection points, a possible collision of the ego vehicle with the target is predicted based on the probability for the ego vehicle to reach the most critical intersection points within a predefined time interval.

According to a second aspect, the invention provides a device of predicting a possible collision, which comprises an interface and an evaluation unit. The interface is adapted to receive sensor data related to the target, as well as ego vehicle data such as length, width, position of the rear axle and steering angle. The evaluation unit is adapted to construct the approximated core path of the target based on the received sensor data, then to compute the core path of the ego vehicle, to predict the ego vehicle core path up to a maximum admissible value and to compute the intersection points of respective core paths. By taking into consideration the most critical intersection points, the evaluation unit also is adapted to compute the probability for the ego vehicle to reach those points under a predefined time interval.

According to a third aspect, the invention provides a vehicle equipped with a sensor system adapted to provide sensor data of a surrounding of the ego vehicle, and steering and/or braking systems able to receive signals from a device for predicting a possible collision.

According to the invention, the most critical distance to the intersection between a steering ego vehicle and a target vehicle having crossing paths is accurately computed. Having this distance computed, a more precise time to crossing is computed for each of the two implied vehicles, and further on it is possible to autonomously take a better decision, for example when to automatically apply a brake.

The method also enriches the set of possible scenarios of avoidance of lateral collisions and it increases as well the false positive performance. Also, the considered function can be executed, this way, in other situations as well, like the case when target vehicle is steering.

According to a preferred embodiment of the method, it is computed the critical distance required to be travelled by the ego vehicle to intersect the target.

According to another embodiment of the method, it is computed the time to crossing the computed critical distance by the ego vehicle.

According to another embodiment of the method, it is defined a threshold that identify a time to collision with the target by the ego vehicle, and providing signals to the ego vehicle to effect the ego vehicle steering or braking systems, when the computed time to crossing exceeds the defined time to collision.

According to particular embodiment of the method, the curvilinear core path is delimited by the curves given by the radiuses of the circles described by all four corners of the ego vehicle.

According to a particular embodiment of the method, the maximum length of the core path for the ego vehicle corresponds to a steer angle of 180°.

According to a particular embodiment of the method, the current approximated core path of the target is constructed using regression.

According to a particular embodiment of the method, the curvilinear path of the ego vehicle is computed as a circular path when the steering angle of the ego vehicle is constant.

According to a particular embodiment of the method, the curvilinear path of the ego vehicle is computed as a combination of curvilinear and rectilinear parts.

According to a particular embodiment of the method, the curvilinear path is computed as a part of complex curve, like parabola, clothoid, or the like, when the steering angle of the ego vehicle is not constant.

According to a preferred embodiment of the device, the evaluation unit is adapted to construct the current approximated core path of the target using regression.

According to another embodiment of the device, the evaluation unit is adapted to compute the critical distance required to be travelled by the ego vehicle to intersect the target.

According to another embodiment of the device, the evaluation unit is adapted to compute the critical distance required to be travelled by the ego vehicle to intersect the target.

According to another embodiment of the device, the evaluation unit is adapted to compute a time to crossing the computed critical distance for ego vehicle.

According to another embodiment of the device, the evaluation unit is further adapted to define a threshold that identify a time to collision with the target by the ego vehicle, and providing signals to the ego vehicle to effect the ego vehicle steering or braking systems, when the computed time to crossing exceeds the defined time to collision.

For a more complete understanding of the invention and the advantages thereof, exemplary embodiments of the invention are explained in more detail in the following description with reference to the attached figures, in which similar reference numbers designate similar parts. The figures show:

Fig. 1 - a schematic block diagram of a device for predicting a possible collision of a vehicle with a target, according to an embodiment of the invention;

Fig. 2 - a schematic block diagram of a vehicle equipped with steering and braking systems and with a device according to an embodiment of the invention;

Fig. 3 - a schematic top view of a steering ego vehicle according to the invention;

Fig. 4a - a top view of a possible curved core path for forward movement;

Fig. 4b - a top view of a possible curved core path for backward movement;

Fig. 5 - an illustration of a reverse path;

Fig. 6 - an example of intersection of ego vehicle and target core paths where the ego core path is circular and bends towards the target core path, which is straight;

Fig. 7 - an example of prediction of the intersection points on the core path, computed according to the invention;

Fig. 8 - an example of a possible road scenario, where a curved target core path bends towards an ego straight core path;

Fig. 9 - a possible road scenario where ego and target curved core paths do not cross;

Fig. 10 - a possible road scenario of lateral collision between a steering ego vehicle and a target vehicle having a straight path;

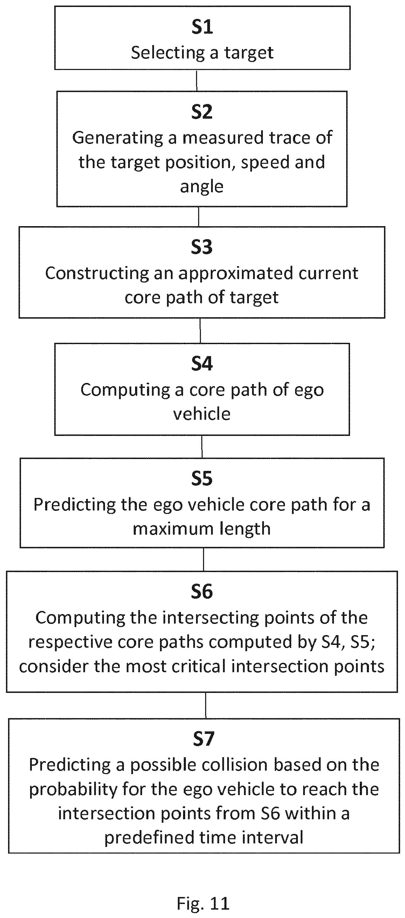

Fig. 11 - a flowchart of a method for predicting a possible collision of the ego vehicle with a target, according to the invention.

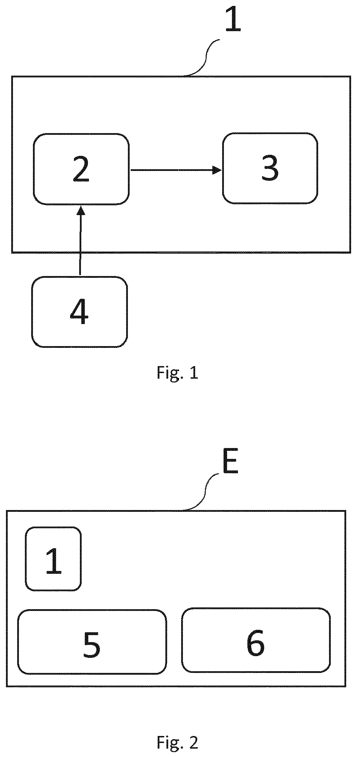

Fig. 1 shows a schematic block diagram of a device 1 for predicting a possible collision of an ego vehicle E with another traffic participant, designated as target T. The traffic participant can be, in the context of the invention, a moving object (described as a rectangle), such as a motor vehicle, a motorcycle/bicycle or alike.

A schematic view of an ego vehicle E equipped with such a device 1 and with systems of sensing 4, steering 5 and braking 6 is illustrated in Fig. 2.

The device 1 comprises an interface 2 which is adapted to receive input data from any active form of remote sensing, such as radar, lidar, optic or infrared sensors, for example. The received input data are related to a target external to said ego vehicle E, said target T being present in a predetermined scanning zone of the sensing system 4. In order to facilitate the understanding of the invention, the traffic participant designated as target T in this description is an oncoming vehicle, whose direction (angle) of movement over ground has been detected and history of measurement positions has been generated as a trace.

Further on, the device 1 comprises an evaluation unit 3 adapted to construct an approximated path (trajectory) of target T based on the measured trace, for example, using regression. No matter the method used and the obtained trajectory, the core can be considered the curve parallel to the computed trajectory that contains the intersection of the diagonals (for rectangle objects, as in the illustrated case), and the edges of the path are the parallels that contain the corners considered in the direction of movement of target T.

The evaluation unit 3 is further adapted to compute the probability for the ego vehicle E to reach the most critical intersection points within a predefined time interval, according to the method which is described in detail in the following section.

It is of interest, for the purpose of this invention, to discuss all the situations requiring to compute the minimum distance to be travelled by the ego vehicle E up to virtually crossing of target T, when at least one of them doesn't have a rectilinear trajectory. For the case when both ego vehicle E and target T follow rectilinear paths simpler solutions already exist.

For the beginning, the case of an ego vehicle E following a circular path will be detailed in the following.

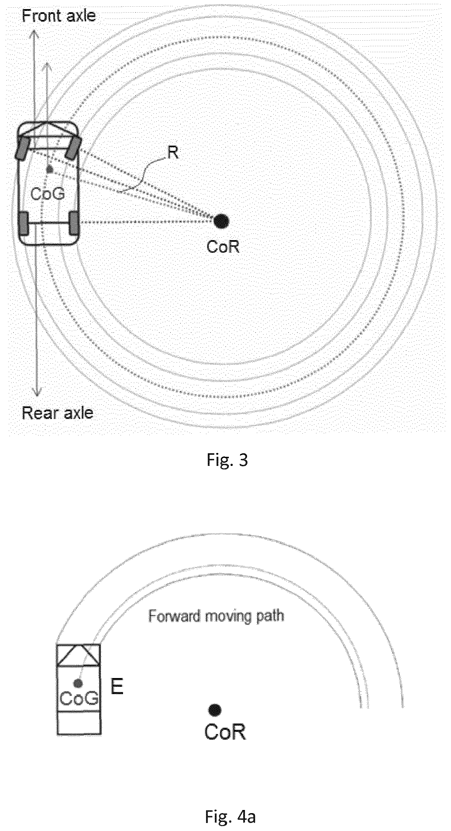

In this case, ego vehicle E follows a circular path, i.e. having a constant curve, with a constant speed. At every instant, the curve driven by a modern car can be obtained via the vehicle's CAN. It is computed based on information obtained from steering angle sensors. For the position of the steering wheel considered, the car is supposed to drive on a circle. That's why the curve information is computed as 1/R, where R is the radius of the circle on which the center of gravity CoG of the car is considered to run in that specific moment. Every other point of the car will describe a circle that is concentric with this one and so are the wheels of the car, which are tangent, in their middle, to such circles. The center of these circles, called the center of rotation *CoR* of the vehicle, is on the line that contains the rear axle of the car, as shown in Fig. 3.

Both the X-axis position of the CoG (on Y-axis it has the value 0, which is in the middle of the car), $x_{CoG}$, and of the rear axle, $x_{Ra}$, are known. By knowing the curve, the position of the CoG and the position of the rear axle, it is possible to compute the Y coordinate of the center of rotation CoR of the vehicle as follows:

$$y_{CoR} = \pm \sqrt{(\frac{1}{Curve})^2 - (x_{Ra} - x_{CoG})^2} \qquad (1),$$

where the sign is extracted from the curve sign, being negative when ego vehicle E steers right.

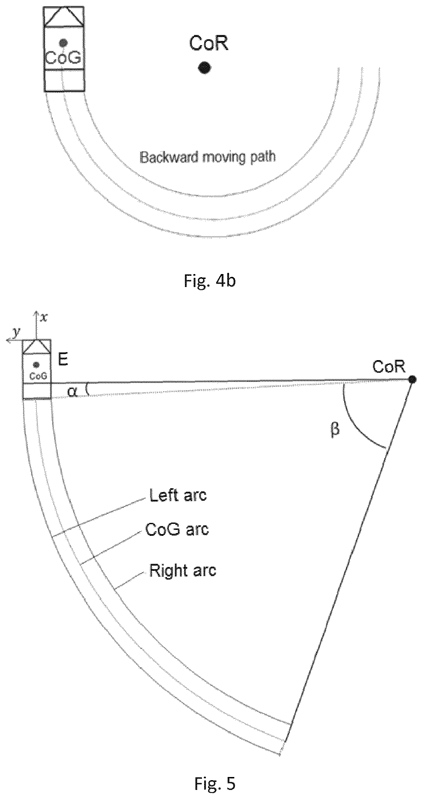

The value of the radical alone is the radius of the circle that contains the center of the rear axle, $R_{Ra}$. By knowing that, the width, the length of the car, and the position of the rear axle (already known), it is possible to easily determine radiuses of the circles described by all four corners of the car, which are of interest together with the trajectory of the CoG, depending on the direction of movement. They are computed as hypotenuses in right triangles where the catheti can be easily determined from the abovementioned values. As the center of the rotation circle is already known, it is possible now to describe the path of ego vehicle R, described by arcs of circle, as in Fig. 4a or Fig. 4b.

After having finished the computations suggested so far, for each direction of movement (i.e. forward or, respectively, backwards) the position of the center of rotation, $(x_{CoR}, y_{CoR})$, and the radiuses, $R_{left}, R_{right}, R_{CoG}$, are obtained. These inputs are enough in order to describe the circles that the respective points from the car would follow for a movement with constant curve and speed.

The CoG circle is what is called the core of the path (there are given later more details about it), on which the distance to be run by the vehicle can be computed, and on which the overall speed is also computed. It is considered to be an appropriate choice, because of the fact that it has the radius close to the average of the radiuses of the circles described by all the four wheels, as it is approximately in the middle of the car.

Other core paths can also be considered, depending on how the overall speed and the distance are computed for the respective vehicles, like the one containing the intersection of the diagonals of the axles, but the differences should be insignificant for average cars.

The path prediction for an at most 180 degrees turn of the car is taken into consideration, as shown in Fig. 4a or 4b, as turns of a greater angle are not plausible in practice. For high curve values this is the path to consider, while for lower curves the path will be limited to a certain maximum length. The maximum length, $L_{max}$, is chosen based on important properties of the function, as the maximum speed limit and the considered time to crossing values, and it is considered as length of the CoG arc of circle, starting from the ego vehicle side (i.e. front or rear). The other arcs are limited to the intersection with the line containing the CoR and the end of the CoG arc, as seen in Fig. 5.

The length of the path considered, for a 180 degrees turn is:

$$L = (\Pi - \alpha) \times R_{CoG} \qquad (2),$$

where $\alpha$ (see Fig. 5) is the unsigned value of the angle at the center of the CoG circle of the arc delimited by the rear axle and the ego vehicle E side (i.e. front or rear).

$$\alpha = \arcsin \frac{d_{Ra}}{R_{CoG}} \qquad (3),$$

where $d_{Ra}$ is the distance between the rear axle and the considered side, which distance can be easily determined from car's length and the position of the rear axle.

When $L > L_{max}$, the $\beta$ angle is computed (see Fig. 5), which corresponds to an $L_{max}$ path length, as

$$\beta = \frac{L_{max}}{L} \times (\Pi - \alpha) \qquad (4),$$

if $L \leq L_{max}$, then

$$\beta = \Pi - \alpha \qquad (5)$$

Then the total angle $\gamma$ is computed as

$$\gamma = \alpha + \beta \qquad (6)$$

which will have at most n radians.

After all the angles of interest at the center of the circles are determined, the next step it is to find out the interval in which the Y coordinates of the points from the three circles are included. For the edges of the path, the end of this interval, towards the car, for the left edge is

$$Y_{car\_left} = \frac{w_{car}}{2} \qquad (7)$$

and for the right one,

$$y_{car\_right} = -\frac{w_{car}}{2} \qquad (7'),$$

where $w_{car}$ is the width of the car.

For the CoG arc, for a right turn it is

$$y_{car\_CoG} = cos\alpha \times R_{CoG} - R_{Ra} \qquad (8),$$

or for a left turn,

$$y_{car\_CoG} = R_{Ra} - cos\alpha \times R_{CoG} \qquad (8').$$

For the other end of the interval, the following formula is used for the computation of the interval limit, for the CoG arc:

$$y_{end\_CoG} = y_{car\_CoG} + crd\gamma \times R_{CoG} \times sin\frac{\gamma}{2} \qquad (9)$$

or

$$y_{end\_CoG} = y_{car\_CoG} - crd\gamma \times R_{CoG} \times sin\frac{\gamma}{2} \qquad (9')$$

for a left or,respectively, for a right turn, where

$$crd\gamma = 2 \times sin\frac{\gamma}{2} \qquad (10)$$

is the chord corresponding to the considered arc, with the angle $\gamma$ at the middle of the circle. $y_{end\_left}$ and $y_{end\_right}$ are computed similarly. Now the intervals $I_{y,x} = [y_{end\_x}, y_{car\_x}]$ or $[y_{car\_x}, y_{end\_x}]$ are computed, depending on the steering direction (i.e. left or, respectively, right). They delimit the respective parts of the path, namely the left edge, the right edge and the path's core (i.e. the CoG arc). The next step, which computes the distance to crossing, is dependent on these intervals, as well as on the previously computed center of rotation and corresponding radiuses.

So far, it has been provided one example of calculation of ego's path, for the case of constant curve (ego vehicle E follows a circular trajectory), each cycle, and the speed lower than the maximum value for which the car could follow that curve. However, the same idea applies for any other method of computing the ego's path, like when considering more complex trajectories, as, for example, arcs of clothoids, parabolas, combinations of any curves with rectilinear trajectories etc., and also to any method of computing a curved target's path (so that the distance of target T to the intersection point can be computed).

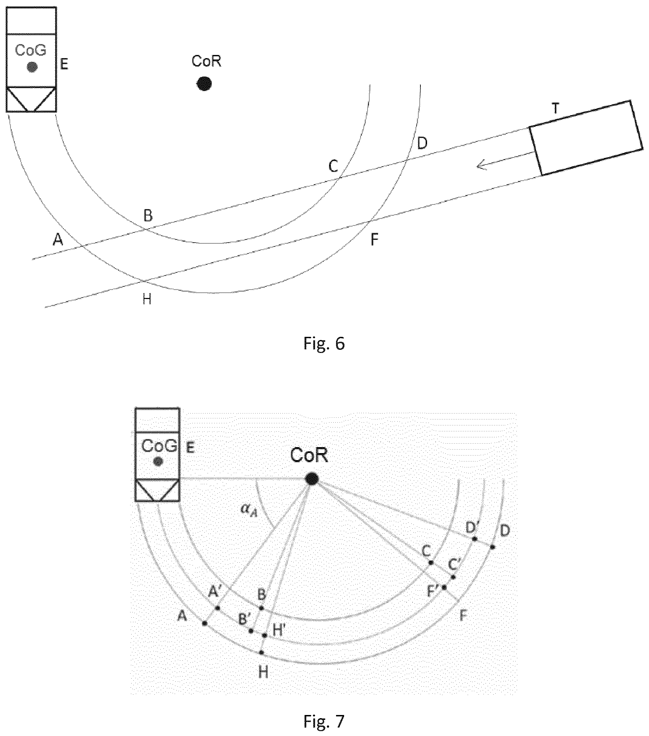

On the exemplary embodiment discussed so far, it is shown how to compute the intersection of the paths and, later, the distance that ego vehicle E has until the intersection with the path of target T. In order to keep the example simple, a rectilinear movement is considered for target T. In Fig. 6 such a possible road scenario is illustrated.

Here, a target, T, whose path edges have been already computed is shown.

In this situation, knowing the position of the upper left corner (front-right, considering the direction of movement), $(x_{cr}, y_{cr})$, the equation of the line describing the corresponding path's edge is:

$$x = \frac{y-n}{m} \qquad (11),$$

where $y \in R$, m is the slope deduced from the angle, and the Y intercept, n, is deduced after having computed the slope, by using the known values, $x_{cr}$ and $y_{cr}$. Similarly the equation of the other path edge is computed.

Having the equation of the two arcs of circle describing ego's path edges, the device 3 is afterwards able to compute the intersection points between all the path edges by equalizing the equations. This can be generalized for any possible curve type.

In the illustrated case:

$$\mathrm{x} = \pm \sqrt{(R^2 - (y - y_{CoR})^2)} - x_{CoR}) \qquad (12),$$

the minus sign being associated with driving backwards, where R is the radius of the corresponding circle and $y \in I_{y,x}$, where $I_{y,x}$ is the corresponding previously computed interval delimiting the arc.

From these equations four quadratic equations are obtained, having the form:

$$(\mathrm{m}^2+1)\,\mathrm{y}^2-2\,(\mathrm{y}_{CoR}\mathrm{m}^2\pm\mathrm{x}_{CoR}\mathrm{m}+\mathrm{n})\,\mathrm{y}+(\mathrm{m}^2\,(\mathrm{x}^2_{CoR}+\mathrm{y}^2_{CoR}-\mathrm{R}^2)\pm2\mathrm{x}_{CoR}\mathrm{mn}+\mathrm{n}^2) = 0 \quad (13),$$

where $y \in I_{y,x}$, and the sign (in the occurrences of "$\pm$") is depending on the direction of movement (minus for forward).

From here at most eight intersection points are obtained. In Fig. 6, for example, six such intersection points can be found.

Having computed the intersection points as above, the device 3 is able to compute the critical distance to crossing, which is the distance that the ego vehicle E has to run in order to reach the most critical intersection point. Doing this, the intersection points are predicted on the core path, as in Fig. 7.

To do this, for the illustrated case, the angles $\alpha_x$ at the center of the circle are computed for all the intersection points, like in the $\alpha_A$ example from Fig. 7, for point A, with the mathematical expression:

$$\alpha_{\mathrm{x}} = \arccos\frac{|y_x - y_{CoR}|}{R} \ (\text{plus } \frac{\pi}{2} \text{ for } y_x \text{ values beyond } \mathrm{y}_{CoR}) \ (14),$$

where $y_x$ is the computed solution of one of the quadratic equations above. Having these angles, the distance towards the predictions of the intersection points on the path's core (which is, actually, of interest) is

$$d_x = (\alpha_x - \alpha) \times R_{CoG} \qquad (15),$$

where $\alpha$ is the angle from Fig. 5, already computed. With all these distances, the evaluation unit 3 chooses the smallest one, which is the distance D of concern, until the intersection with target T following the given curved ego's E path. For the illustrated case, the distance will be the length of the arc from the back of ego E to the point A'.

The same method will be applied to all the possible ego vehicle E or target T path curves (as seen in Fig. 7), given appropriate methods of computing the prediction on the core path of the intersection points and of computing the distance, on the core (which would be the length of a considered arc of the core, or a sum of such values, for combined trajectories), towards this prediction.

The computed distance can be used to find the time to crossing (or TTC) for each of the two implied vehicles, and, based on them, it is possible to autonomously take a better decision.

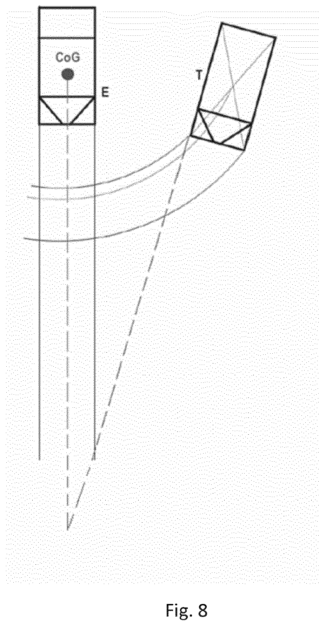

According to another embodiment illustrated in Fig. 8, when ego vehicle has a straight path and target is predicted to have a curvilinear path bent towards ego vehicle E, the time to crossing TTC is computed more accurately. It is easy to observe, in Fig. 8, how having computed a curved target path reduces significantly the distance to crossing for both ego E and target T, than in the case when both would have followed a straight path, situation illustrated by dashed lines. This reduces both ego's and target's time to collision (computed as distance/speed), as the speed remains the same. As TTC is one of important factors to be considered in order to take a decision, this leads to an important brake request that otherwise would have been omitted or delayed.

The same conclusion can apply for the case when target T would have followed a rectilinear path and ego vehicle E a similar curved path or when both would have had curved paths.

In a similar way an otherwise small computed time to collision can become bigger when one of the cars is steering away from the other one and this way an action can be safely delayed or even avoided, if it would have been unintended. This is desired because it reduces the risk of entering in a conflict with driver's decisions, with too early actions.

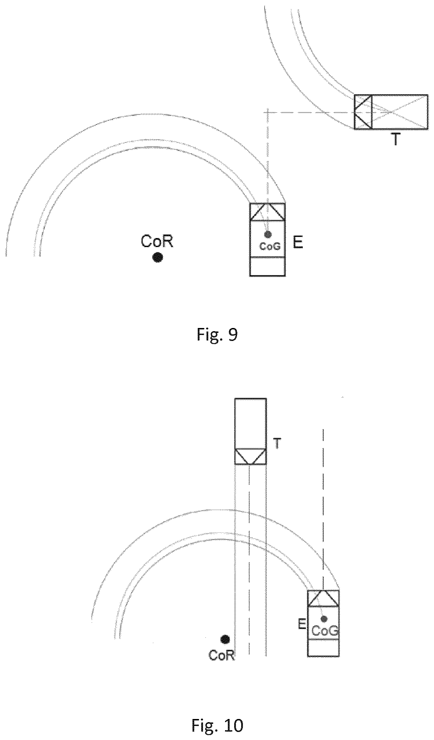

Another exemplary embodiment is found in Fig. 9, where, as it can be seen, cars whose directions of movement at a certain point could be considered as intersecting for straight paths, illustrated as dashed lines, are predicted actually not to have intersecting paths. As a consequence, a false action is prevented.

In Fig. 10 another exemplary embodiment can be seen, illustrating another advantage given by this invention. A situation which without curved path intersections wouldn't have been a lateral collision avoidance scenario can easily be detected as such or it can, at least, be detected earlier. When considering straight paths, one method to detect lateral collision situations is to do an approaching angle check.

In the situation illustrated in Fig. 10, target T might have not been detected as a critical object to take an action for, since by considering their straight paths, illustrated by interrupted lines, do not cross. In this situation, the path intersection makes it useless to use such an approach like the one of verifying an approaching angle, because it is enough to compute the intersection of paths and to see if there's a risk of collision.

The same observation could apply to variations of this scenario, like the situation when target T is steering towards the ego E, or both of them steer toward the other.

While certain embodiments of the present invention have been described in detail, those familiar with the art to which this invention relates will recognize various alternative designs and embodiments for practicing the invention as defined by the following claims.

LIST OF REFERENCE SIGNS

1    device
2    interface
3    evaluation unit
4    sensor system
5    steering system
6    braking system

E      ego vehicle
T      target
CoG    center of gravity
CoR    center of rotation

**Claims**

1.   A method of predicting a possible collision between an ego vehicle and an oncoming traffic participant, at least one of them following a curved path, the method comprising:

- (S1) when said oncoming traffic participant is detected in a predetermined scanning zone, selecting the traffic participant as a target;
- (S2) generating a measured trace of the target position, speed and angle;
- (S3) constructing an approximated current core path of the target,
- (S4) computing a core path of the ego vehicle, assuming the ego vehicle width, length, position of the rear axle and steering angle,
- (S5) predicting the ego vehicle core path by extrapolating the current core path for a maximum admissible length;
- (S6) computing the intersecting points of the predicted core path of the ego vehicle and the approximated core path of the target and taking into consideration the most critical intersection point;
- (S7) predicting a possible collision of the ego vehicle with the target based on the probability for the ego vehicle to reach the most critical intersection points within a predefined time interval.

2.   Method according to claim 1, **characterized by that** it also comprises (S71) computing the critical distance required to be travelled by the ego vehicle to intersect the target.

3.   Method according to claim 1, **characterized by that** it also comprises (S72) computing time to crossing the computed critical distance for ego vehicle.

4.   Method according to claim 1, **characterized in that** comprises defining a threshold that identify a time to collision with the target by the ego vehicle, and providing signals to the ego vehicle to effect the ego vehicle steering or braking systems, when the computed time-to-crossing exceeds the defined time to collision.

5. Method according to claims 1, **characterized in that** the curvilinear core path is delimited by the curves given by the radiuses of the circles described by all four corners of the ego vehicle.

6. Method according to claims 1 and 2, **characterized in that** the maximum length of the core path for the ego vehicle corresponds to a steer angle of 180°.

7. Method according to any of the precedent claims, **characterized by that** current approximated core path of the target is constructed using regression.

8. Method according to claim 1, **characterized in that** the curvilinear path of the ego vehicle is computed as a circular path when the steering angle of the ego vehicle is constant.

9. Method according to claim 1, **characterized in that** the curvilinear path of the ego vehicle is computed as a combination of curvilinear and rectilinear parts.

10. Method according to claim 1, **characterized in that** the curvilinear path is computed as a part of complex curve, like parabola, clothoid, or the like, when the steering angle of the ego vehicle is not constant.

11. A device (1) of predicting a possible collision, comprising:

   - an interface (2) adapted to receive sensor data related to a target, as well as ego vehicle data such as length, width, position of the rear axle and steering angle;
   - an evaluation unit (3) adapted to

   o construct a current approximated core path of the target based on the received sensor data;
   o compute a core path of the ego vehicle,
   o predict the ego vehicle core path by extrapolating the current core path for a maximum admissible value;
   o compute the intersecting points of the predicted core path of the ego vehicle and the core path of the target and to take into consideration the most critical intersection points;
   o compute the probability for the ego vehicle to reach the most critical intersection points within a predefined time interval.

12. Device according to claim 11, **characterized in that** the evaluation unit (3) is adapted to construct the current approximated core path of the target using regression.

13. Device according to claim 11, **characterized in that** the evaluation unit (3) is adapted to compute the critical distance required to be travelled by the ego vehicle to intersect the target.

14. Device according to claims 11-13, **characterized in that** the evaluation unit (3) is adapted to compute a time to crossing the computed critical distance for ego vehicle.

15. Device according to claims 11-14, **characterized in that** the evaluation unit (3) is further adapted to define a threshold that identify a time to collision with the target by the ego vehicle, and providing signals to the ego vehicle to effect the ego vehicle steering (5) or braking (6) systems, when the computed time to crossing exceeds the defined time to collision.

16. A vehicle equipped with a sensor system (4) adapted to provide sensor data of a surrounding of the ego vehicle, and steering (5) and/or braking (6) systems able to receive signals from a device according to any of the claims 11 to 15.

1

Fig. 1

E

Fig. 2

Fig. 3

Fig. 4a

CoG

CoR

Backward moving path

Fig. 4b

*x*

*y*

E

CoG

α

CoR

β

Left arc

CoG arc

Right arc

Fig. 5

Fig. 6

Fig. 7

Fig. 8

Fig. 9

Fig. 10

**S1**
Selecting a target

**S2**
Generating a measured trace of the target position, speed and angle

**S3**
Constructing an approximated current core path of target

**S4**
Computing a core path of ego vehicle

**S5**
Predicting the ego vehicle core path for a maximum length

**S6**
Computing the intersecting points of the respective core paths computed by S4, S5; consider the most critical intersection points

**S7**
Predicting a possible collision based on the probability for the ego vehicle to reach the intersection points from S6 within a predefined time interval

Fig. 11

Europäisches
Patentamt

European
Patent Office

Office européen
des brevets

# EUROPEAN SEARCH REPORT

Application Number

EP 17 46 5548

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 208 654 A1 (FORD GLOBAL TECH LLC [US]) 21 July 2010 (2010-07-21) * paragraphs [0017] - [0040] * * figure 2 * | 1-16 | INV. B60W30/095 |
| X | EP 2 495 713 A1 (TOYOTA MOTOR CO LTD [JP]) 5 September 2012 (2012-09-05) * paragraphs [0026] - [0092] * * figures 8, 9 * | 1-16 | |
| A | EP 3 006 294 A1 (HITACHI AUTOMOTIVE SYSTEMS LTD [JP]) 13 April 2016 (2016-04-13) * paragraphs [0012] - [0118] * | 1-16 | |
| A | US 2014/303882 A1 (JANG JEONG-AH [KR] ET AL) 9 October 2014 (2014-10-09) * paragraphs [0042] - [0173] * | 1-16 | |
| A | JP 2007 164339 A (TOYOTA CENTRAL RES & DEV) 28 June 2007 (2007-06-28) * abstract * | 1-16 | TECHNICAL FIELDS SEARCHED (IPC) B60W |

The present search report has been drawn up for all claims

| Place of search | Date of completion of the search | Examiner |
|---|---|---|
| Munich | 14 March 2018 | Müller-Nagy, Andrea |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&: member of the same patent family, corresponding
    document

EPO FORM 1503 03.82 (P04C01)

**EP 3 456 596 A1**

## ANNEX TO THE EUROPEAN SEARCH REPORT
## ON EUROPEAN PATENT APPLICATION NO.

EP 17 46 5548

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2018

| Patent document cited in search report | | | Publication date | Patent family member(s) | | Publication date |
|---|---|---|---|---|---|---|
| EP 2208654 | A1 | | 21-07-2010 | NONE | | |
| EP 2495713 | A1 | | 05-09-2012 | CN | 102598083 A | 18-07-2012 |
| | | | | EP | 2495713 A1 | 05-09-2012 |
| | | | | JP | 5407764 B2 | 05-02-2014 |
| | | | | JP | 2011096105 A | 12-05-2011 |
| | | | | US | 2012218093 A1 | 30-08-2012 |
| | | | | WO | 2011052247 A1 | 05-05-2011 |
| EP 3006294 | A1 | | 13-04-2016 | CN | 105246755 A | 13-01-2016 |
| | | | | EP | 3006294 A1 | 13-04-2016 |
| | | | | JP | 2017121933 A | 13-07-2017 |
| | | | | JP | WO2014192370 A1 | 23-02-2017 |
| | | | | US | 2016114800 A1 | 28-04-2016 |
| | | | | WO | 2014192370 A1 | 04-12-2014 |
| US 2014303882 | A1 | | 09-10-2014 | KR | 20140121544 A | 16-10-2014 |
| | | | | US | 2014303882 A1 | 09-10-2014 |
| JP 2007164339 | A | | 28-06-2007 | JP | 4853005 B2 | 11-01-2012 |
| | | | | JP | 2007164339 A | 28-06-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8060306 B2

- US 5841366 A